# EUROPEAN PATENT APPLICATION

(11) **EP 4 748 772 A1**
(43) Date of publication of application: **27.05.2026**
(21) Application number: 24214187.7
(22) Date of filing: 20.11.2024
(51) Int. Cl.: B66C 1/10, B66C 13/02, B66C 13/08

(54) **WIND TURBINE ROTOR BLADE LIFTING ARRANGEMENT**

(71) Applicant: Siemens Gamesa Renewable Energy A/S, 7330 Brande (DK)
(72) Inventor: Steck, Christian, 22927 Großhansdorf (DE); Moeller, Jesper, 7330 Brande (DK); Roura Sues, Miguel, 28032 Madrid (ES)
(74) Representative: SGRE-Association

(57) **Abstract**

The invention describes a lifting arrangement (1) for handling a wind turbine rotor blade (20) using a crane (3), which lifting arrangement (1) comprises a lifting yoke (30) for suspending a rotor blade (20) from a crane hook (31); a sensor arrangement (10) configured to measure the spatial orientation of the lifting yoke (30); an evaluation module (121) configured to detect horizontal oscillation (100X) of the lifting yoke (30) on the basis of the sensor output (100); a response module (122) configured to compute a damping response (R1, R2) to counteract a detected horizontal oscillation (100X); and a means (32,35, 37) of applying the damping response (R1, R2) to the lifting yoke (30). The invention further describes a method of handling a wind turbine rotor blade (20) using a crane (3).

## Description

### Background

The rotor blade length of wind turbines has increased continually over the years, and installation costs have increased accordingly. Particularly in the case of offshore wind turbines, transport and installation costs are significant. For example, to assemble the aerodynamic rotor of an offshore wind turbine, the rotor blades are first transported to the offshore site. Each rotor blade is then lifted to hub height using a crane, for example an on-board crane of a jackup vessel or jackup rig. At hub height, a rotor blade landing system is deployed to catch and "land" the root end of the rotor blade to a pitch ring on the hub. In an established landing procedure, the rotor blade is held horizontally by a lifting yoke that is specially constructed to fit about the rotor blade's centre of mass, and various taglines extending between the yoke and the crane are deployed to stabilize the rotor blade.

In the case of long rotor blades, with a length in the order of 80 m or more, wind conditions during the landing procedure are increasingly problematic. For a long rotor blade held essentially horizontally and "flat" (i.e. with one of its two airfoil surfaces facing skyward) in a lifting yoke, wind speeds above a certain threshold generate high aerodynamic forces on the airfoil, causing the horizontally-held rotor blade to tilt up and down, making it impossible to maintain the alignment necessary for landing the rotor blade safely, i.e. within the required tolerances (chosen to avoid damage to the rotor blade landing system and exposed components such as root end bolts), even with the aid of taglines. This problem is exacerbated by increasing rotor blade length, since any aerodynamic forces, such as drag forces acting essentially horizontally on the blade has a longer lever arm and a larger surface exposed to the airflow. Unfavourable wind conditions therefore increase risk of damage to the rotor blade and the hazards to which personnel are exposed. For these reasons, an offshore rotor blade landing procedure may need to be postponed for hours or even days until wind conditions are once again considered to be sufficiently safe. During that time, the installation vessel costs accrue, adding significantly to the installation costs.

It is therefore an object of the invention to provide a safe means of landing a long wind turbine rotor blade in unfavourable wind conditions.

This object is achieved by the claimed lifting arrangement and by the claimed method of handling a wind turbine rotor blade using a crane.

### Description

The lifting arrangement as claimed may be understood, for example, as an offshore arrangement, deploying an on-board crane of an offshore jackup vessel, a jackup rig, etc. to raise a wind turbine rotor blade towards the hub of a partially assembled wind turbine. The inventive lifting arrangement is particularly suited for landing a horizontally-held rotor blade that is very long, since it allows a very long rotor blade to be safely handled even at wind speeds that would otherwise be regarded as unsafe. Here, a "very long" rotor blade shall be understood to have a length of more than 60 m, preferably 90 m, and for example a length of 110 m or even more. A "horizontally-held rotor blade" shall be understood as a wind turbine rotor blade that is held with its chord plane essentially "flat", i.e. with one of its two airfoil surfaces (pressure side or suction side) facing skyward.

The invention offers an improvement to any type of lifting arrangement in which a lifting yoke, suspended from a crane hook, is deployed to hold a rotor blade in a horizontal fashion as described above. The lifting yoke shall be understood to comprise an open frame structure, with an assembly of trunnions and slings for suspending the lifting yoke from the crane hook. The lifting yoke may include one or more airfoil clamps that are shaped to fit about the rotor blade airfoil. The lifting yoke may be constructed so that, when clamped about the rotor blade and suspended from the crane hook, the centre of mass of the lifting yoke essentially coincides with the centre of mass of the horizontally-held rotor blade.

According to the invention, the lifting arrangement further comprises a sensor arrangement configured to measure the spatial orientation of the lifting yoke, and therefore also the rotor blade, during a lifting manoeuvre. The sensor arrangement can generate sensor output essentially continuously, reporting the sensed spatial orientation of the lifting yoke. The inventive lifting arrangement further comprises an evaluation module configured to analyse the sensor output and to detect horizontal oscillation of the lifting yoke on the basis of the sensor output. The inventive lifting arrangement further comprises a response module which computes a damping response to counteract a detected horizontal oscillation, and a means of applying the damping response to the lifting yoke. The evaluation module and response module can be realised as part of a control unit which receives the sensor output and outputs the damping response.

The inventive lifting arrangement advantageously provides a means of quickly suppressing a horizontal oscillation of the lifting yoke, and therefore also of the rotor blade, for example an oscillation resulting from drag forces acting on the rotor blade airfoil. Such drag forces can result from an unexpected increased in wind speed and/or an unexpected change in wind direction during otherwise "safe" wind speed conditions, for example. The inventive lifting arrangement allows the landing procedure to continue, in contrast to the prior art, in which the landing procedure would need to be interrupted until such time as the wind conditions are once again considered to be safe.

A further advantage of the inventive lifting arrangement is that it contributes to a reduction in the Levelized Cost of

Electricity (LCOE), since it allows a rotor blade landing procedure to be carried out at wind speeds that would otherwise be regarded as unsafe. In other words, the inventive lifting arrangement widens the "window" of safe wind speeds. Since a wind turbine generally has three rotor blades, and an offshore wind park may comprise many tens of wind turbines, any measure that can shorten the duration of installation can be of great benefit.

According to the invention, the method of handling a wind turbine rotor blade comprises steps of arranging a lifting yoke about the rotor blade and suspending the lifting yoke from a crane hook; providing a sensor arrangement to measure the spatial orientation of the lifting yoke during a lifting manoeuvre; evaluating the sensor output to detect horizontal oscillation of the lifting yoke; computing a damping response to counteract a detected horizontal oscillation; and applying the damping response to the lifting yoke during the lifting manoeuvre.

The invention further comprises a computer program product comprising a computer program that is directly loadable into a memory of a control unit of the inventive lifting arrangement, and which comprises program elements for evaluating the sensor output to detect horizontal oscillation of the lifting yoke and for computing the damping response when the computer program is executed by the control unit.

Particularly advantageous embodiments and features of the invention are given by the dependent claims, as revealed in the following description. Features of different claim categories may be combined as appropriate to give further embodiments not described herein.

In the context of the invention, "safely landing a horizontally-held rotor blade" is to be understood as a landing manoeuvre in which motion of the rotor blade root end remains within the tolerances that were chosen to ensure that components of the rotor blade landing system will engage as intended, and that the root end will not collide with the front end of the nacelle. The tolerances that must be complied with during a landing manoeuvre are ultimately determined by the wind speed and the rotor blade length.

Drag forces acting on the rotor blade airfoil during a lifting manoeuvre will cause the suspended rotor blade to oscillate horizontal - i.e. "yawing back and forth through the horizontal plane" - about its centre of mass, thereby resulting in a yawing motion of the lifting yoke in which its root-facing side and its tip-facing side move alternately right and left. Any suitable type(s) of sensor can be used to detect and report a horizontal oscillation of the lifting yoke. In a particularly preferred embodiment of the invention, the sensor arrangement comprises an inertial measurement unit configured to detect motion in three orthogonal directions, of which the horizontal or X-axis direction is of relevance in the context of the invention. Alternatively or in addition, the sensor arrangement of the inventive lifting arrangement can comprise a number of accelerometers, gyroscopes etc., configured to detect motion at least in the X-axis direction. Equally, a horizontal oscillatory motion of the lifting yoke could be detected using an optical sensor arrangement, for example a camera arrangement mounted on the wind turbine hub or other stationary object, configured to "see" and track a visual reference on the lifting yoke.

When lifting a rotor blade by a crane and lifting yoke as described above, multiple tagline systems may be used to stabilize the lifting yoke as the rotor blade is being brought into position. A "horizontal tagline", extending essentially sideways from the lifting yoke towards the crane and a respective winch, can help to stabilize the rotor blade in a horizontal plane. A "vertical" tagline, extending essentially downward from the lifting yoke towards the crane and a respective winch, can help to stabilize the rotor blade in a vertical plane.

In a particularly preferred embodiment of the invention, the inventive lifting arrangement comprises a horizontal tagline arrangement extending between the lifting yoke and the crane, with at least one horizontal tagline extending between the lifting yoke and a winch mounted on a stationary body such as the crane. In a particularly preferred embodiment of the invention, the lifting arrangement comprises a first horizontal tagline connected to one side (e.g. the "root-end side") of the lifting yoke and a second horizontal tagline connected to the other side (the "tip-end side") of the lifting yoke. The other end of a tagline is connected to a motor-driven winch, in particular wherein the tagline is deflected on a deflection point. Each horizontal tagline can be controlled independently of the other horizontal tagline by actuating the respective winch.

In the prior art configuration described in the introduction, the tagline winches of two horizontal taglines are deployed to maintain a predetermined tagline tension and they may be use for a "horizontal yaw alignment function" for yawing the rotor blade with no damping function. While this approach can satisfactorily stabilize a horizontally-held rotor blade with a certain maximum length as long as wind speeds are within a safe limit, it cannot keep the rotor blade stable at wind speeds beyond the safe limit and/or when the rotor blade length exceeds that maximum length.

In contrast, the inventive lifting arrangement is configured to apply a computed damping response to the respective tagline winch. In a preferred embodiment of the invention, the computed damping response comprises a series of adjustment values for each horizontal tagline, wherein each adjustment value achieves essentially the opposite of a horizontal displacement of the lifting yoke.

For example, a sidewards horizontal displacement of one side of the yoke is countered by a pulling force from the other side in the respective tagline. A specified pulling force in a tagline is generated by its winch, which winds the tagline in or out in order to achieve the desired tension. In the context of the invention, an adjustment value for a tagline shall be understood to quantify the desired value of tagline tension or pulling force. Depending on how the tagline system - comprising tagline, winch, and winch controller - is realised, an adjustment value for the winch controller may be a digital value in units of force (kN), mass (kg), etc. In a preferred embodiment, the adjustment value preferably comprises a percentage of the maximum or rated tagline tension.

Preferably, the adjustment value can be presented as a number within a minimum-to-maximum range, for example a range from 0% to 100% in which 0% represents no pulling force and 100% represents a predetermined maximum pulling force. The maximum pulling force of a tagline depends on various factors, such as maximum winch capacity, tagline minimum breaking load, wire thickness, tensile strength, etc. as will be known to the skilled person.

A horizontal tagline in an exemplary configuration may require a pulling force of 5 kN in order to overcome slackness, and may be loaded up to a maximum of 20 kN by its tagline winch. In this case, the corresponding tagline winch interprets a value of 0% as 5 kN (approximately 500 kg) and interprets a value of 100% as 20 kN (approximately 2000 kg); any intermediate value is interpreted accordingly (e.g. a value of 50% is interpreted as 12.5 kN).

The evaluation unit converts any sensed change in the horizontal motion of the lifting yoke into an appropriate number within this range, i.e. into an adjustment value for a tagline, so that the corresponding tagline winch will effect the desired adjustment to counteract that sensed change in the horizontal motion.

For example, if the detected horizontal oscillation of the lifting yoke has a peak-to-peak amplitude in the order of 1 m, part of an exemplary damping response might comprise a series of values such as "..., 150, 30%, 15%, 0%, 10%, 20%, 10%, ...", issued at appropriate intervals, instructing the respective tagline winch to alternately increase/decrease the pulling force of its tagline by amounts that will counteract or damp that oscillatory motion of the lifting yoke. A less severe oscillation of the lifting yoke can be countered by a corresponding lower damping response; a more severe oscillation of the lifting yoke can be countered by a corresponding higher damping response.

The damping response can also be computed to take other factors into consideration, for example factors such as wind speed and/or wind direction. To this end, the control unit of the inventive lifting arrangement can receive meteorological data collected, for example, at the jackup vessel and/or at the wind turbine hub. This data can be used to detect trends in wind speed and/or wind direction, so that the control unit can detect increasing wind speeds and/or a change in wind direction and can adjust the damping response accordingly. For example, if horizontal oscillations of the lifting yoke have been acceptably low but the meteorological data reports a rise in wind speed beyond the safe limit, a pre-emptive damping response can be computed to counteract the expected increase in oscillation amplitude of the lifting yoke. The damping response may be combined with a further means of suppressing horizontal oscillations. For example, systems for dampening tower oscillations may be combined and/or synchronized with the current solution, such that both systems keep the residual oscillation in the same amplitude and frequency to minimize relative displacement in-between blade bearing and blade root.

Each of two horizontal taglines may be controlled independently, so that the damping response comprises a first damping response for the first horizontal tagline and a second damping response for the second horizontal tagline. Since the horizontal oscillation of the lifting yoke is essentially sinusoidal in nature, the damping response for a tagline will comprise alternately high and low pulling force adjustment values. The root-end side of the lifting yoke will moveback (or away from the crane boom) as the tip-end side moves forth (or in direction of the crane boom), so that the damping response for the first horizontal tagline will be high when the second damping response for the second horizontal tagline is low, and vice versa.

In a preferred embodiment of the invention, the damping response is computed to reduce horizontal oscillation of the lifting yoke towards a target parameter, for example towards an acceptable maximum amplitude of horizontal oscillation of the root end. The maximum acceptable amplitude of root end oscillation may depend on the type of landing system being used. For example, the landing system may comprise an outwardly extending arm installed in the open root end of the blade, and shaped to enter a corresponding aperture in a cover plate of the pitch system, or vice versa. An acceptable horizontal oscillation amplitude will depend to some extent on the physical realisation of the landing system. Equally, the target parameter can be a maximum horizontal oscillation amplitude of the lifting yoke, a maximum horizontal yaw angle of the lifting yoke, or any other suitable parameter which can be measured directly by the sensor arrangement or which can be inferred from the sensor output.

The target parameter used to determine the damping response can be a maximum horizontal oscillation amplitude of the lifting yoke; a maximum horizontal oscillation amplitude of the rotor blade root end; a maximum horizontal yaw angle of the lifting yoke, etc., and may be chosen depending on the type of sensor(s) deployed in the sensor arrangement.

A horizontal tagline can extend in an essentially horizontal direction from the lifting yoke to a tagline winch mounted at the base of the crane, or to a tagline winch mounted to the crane at a height above the wind turbine hub height. In the context of such a configuration, the expression "essentially horizontal direction" can cover a relatively large angular range, for example a range of 0°-30° from where the deflection point of the winch is located at the crane boom is considered within the meaning of the invention as a "essentially horizontal direction".

In some embodiments, the tagline can pass over a deflection roller mounted on the crane. For example, a deflection roller can be installed on the crane at a height above hub height, and the winch can be mounted at the level of the crane pedestal. Equally, this configuration can be reversed, so that the winch is installed high up on the crane, and the deflection roller is mounted at the base of the crane. Either way, any pulling force exerted by the tagline on the lifting yoke acts in an essentially horizontal direction. Regardless of the chosen configuration, it shall be understood that the sidewards pulling force exerted by a horizontal tagline can be expressed as a vector with a horizontal component and a vertical component, wherein the horizontal component always exceeds the vertical component.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows a partially assembled offshore wind turbine.
Figure 2 illustrates a known rotor blade lifting procedure using the crane of Figure 1.
Figure 3 shows an embodiment of the inventive lifting arrangement.
Figure 4 illustrates a tagline response determined by the inventive method.
Figure 5 illustrates oscillation of the lifting yoke of Figure 2.
Figure 6 - 7 show further possible embodiments of the inventive lifting arrangement.

In the diagrams, like numbers refer to like objects throughout. Objects in the diagrams are not necessarily drawn to scale.

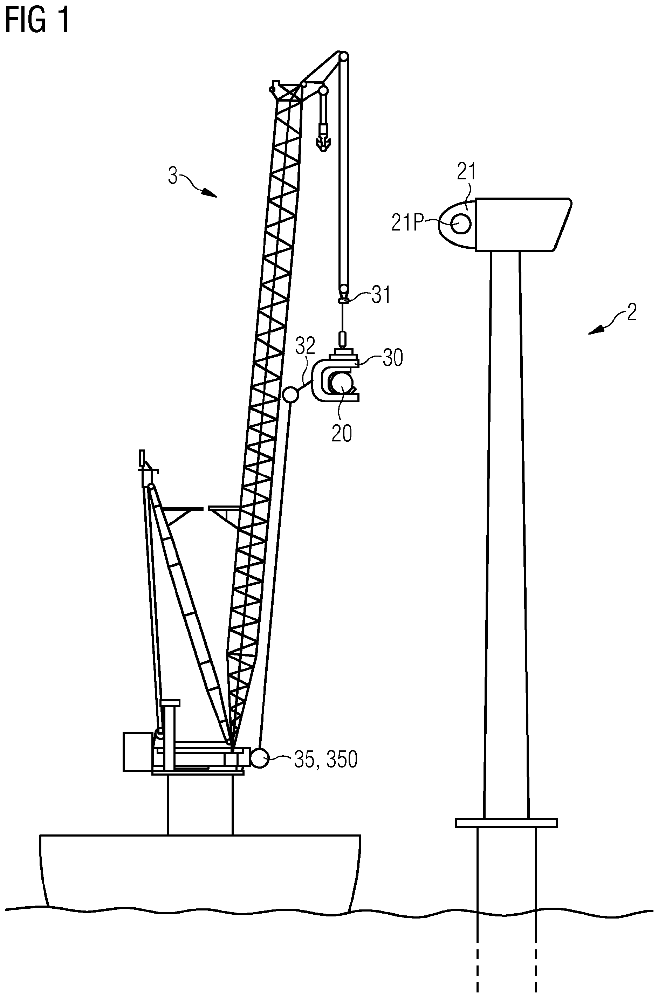

Figure 1 shows a partially assembled offshore wind turbine 2. A jackup vessel has transported wind turbine components to the offshore site, and a rotor blade 20 is being hoisted by a crane 3 of the jackup vessel towards the hub 21 of the wind turbine 2.

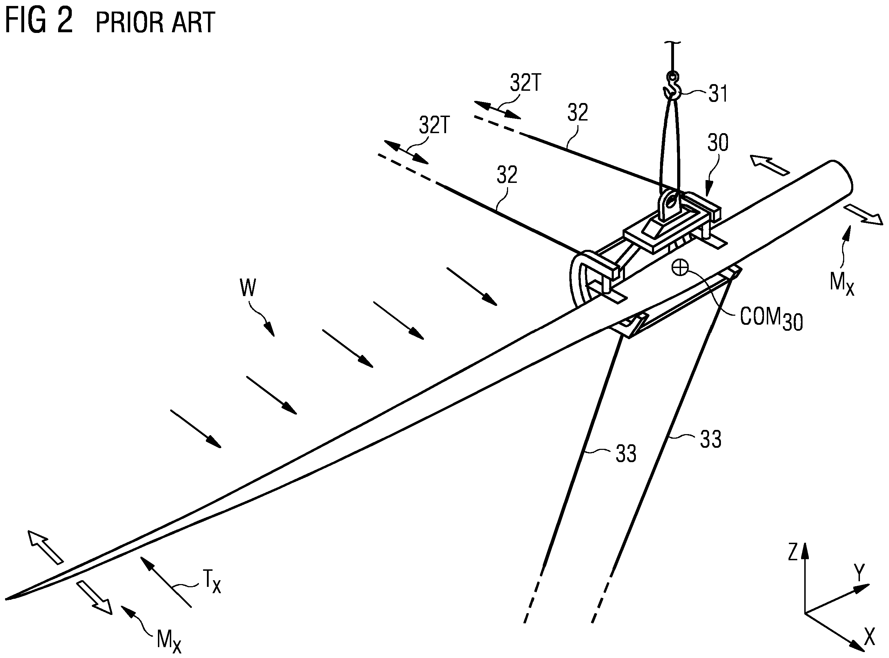

Figure 2 illustrates a known rotor blade lifting procedure using the crane 3 of Figure 1. Here, a rotor blade 20 is held by a lifting yoke 30, which in turn is suspended from a crane hook 31. The crane's is deployed to hoist the lifting yoke 30 (and therefore also the rotor blade 20) towards hub height, moving through the indicated coordinate system. A set of "vertical" taglines 33 is used to stabilize the lifting yoke as the rotor blade is moved towards its pitch ring 21P at the hub 21. Within a certain wind speed range, the configuration of Figure 2 can smoothly and very accurately align the rotor blade root with its pitch ring 21P.

However, strong winds W can lead to fluctuating drag forces Fₓ acting along the span of the rotor blade 20, causing the rotor blade 20 to yaw, for example about the centre of mass COM₃₀ of the lifting yoke 30. Therefore, two "horizontal" taglines 32, each extending from the yoke 30 to a winch 35 at the base of the crane 3, deflected at a deflection point, are deployed to stabilize the lifting yoke 30 in the horizontal or X direction, by paying out or retracting the taglines 32 to maintain a predetermined tension 32T. This effect is essentially "passive" in that it primarily relies on the inherent stiffness of the horizontal taglines 32 to keep the lifting yoke 30 steady as it moves upward. Beyond a previously established wind speed limit, the horizontal taglines 32 are unable to satisfactorily stabilize the lifting yoke 30 against oscillating horizontal movements Mₓ, making it impossible to "land" the rotor blade 20 safely in such wind conditions. The known approach can therefore only be used within the established wind speed limit.

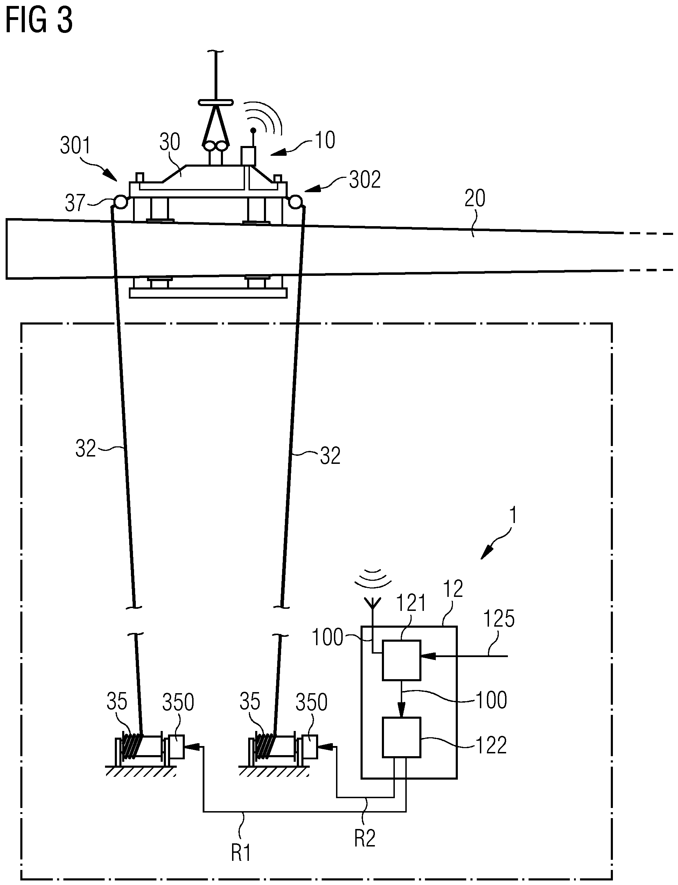

Figure 3 shows an embodiment of the inventive lifting arrangement 1. The configuration is a further development of that shown in Figure 2, with the same crane 3, lifting yoke 30, horizontal taglines 32 and winches 35 installed at the base of the crane 3. The diagram also indicates a winch drive unit 350 (e.g. an electrical motor) for each winch 35.

However, instead of simply actuating the winches 35 of the taglines 32 to maintain a predetermined tension as shown in Figure 2, the inventive lifting arrangement 1 actively damps any horizontal oscillation Mₓ of the lifting yoke 30 about a fulcrum such as its centre of mass. To this end, the inventive lifting arrangement 1 has a sensor arrangement 10 installed on the lifting yoke 30, and a control arrangement 12 configured to evaluate the sensor output 100. In this exemplary embodiment, the sensor arrangement 10 can transmit its output 100 over a wireless connection to the control arrangement 12. The sensor arrangement 10 is configured to measure and report motion - specifically yaw motion motion (Mₓ) - of the lifting yoke 30, continually or at suitably spaced intervals. The control arrangement 12 has an evaluation module 121 which analyses the received sensor output 100 to extract a horizontal oscillation component 100X in the lifting yoke motion.

Such a horizontal oscillation component can comprise the horizontal oscillation component of the root-end side 301 of the lifting yoke 30 as well as the horizontal oscillation component of the tip-end side 302 of the lifting yoke 30; alternatively the evaluation module 121 may identify only the horizontal oscillation component of one side of the lifting yoke 30 (for example the root-end side 301), and the horizontal oscillation component of the other side of the lifting yoke can be assumed to be opposite in sign and similar in magnitude. Preferably, the sensor arrangement and evaluation module are configured to eliminate any relative motion of the lifting yoke from the horizontal oscillation component, i.e. to eliminate any back-and-forth motion (yaw motion) of the lifting yoke relative to a stationary reference.

If a horizontal oscillation component 100X is detected, a response computation module 122 computes the tagline tension adjustments R1, R2 that are required to counteract the horizontal oscillation. The winch 35 of a horizontal tagline 32 applies the respective pulling force adjustment R1, R2, retracting or paying out its tagline 32 as appropriate in order to apply the desired damping response. A tagline response R1, R2, as explained above, can be a series of percentages, alternately increasing and decreasing within a predetermined range. The winch drive unit 350 can be configured to convert an adjustment value into a control signal (e.g. a voltage) that actuates the winch 25 to effect the desired pulling force adjustment; alternatively the response module 122 may convert each adjustment value R1, R2 into a suitable voltage or other control signal for the winch drive unit 350.

As indicated in the diagram, the control arrangement 12 can receive additional relevant input 125 such as wind speed and/or wind direction and/or tower motion, so that the damping response R1, R2 can be computed to take these parameters into consideration.

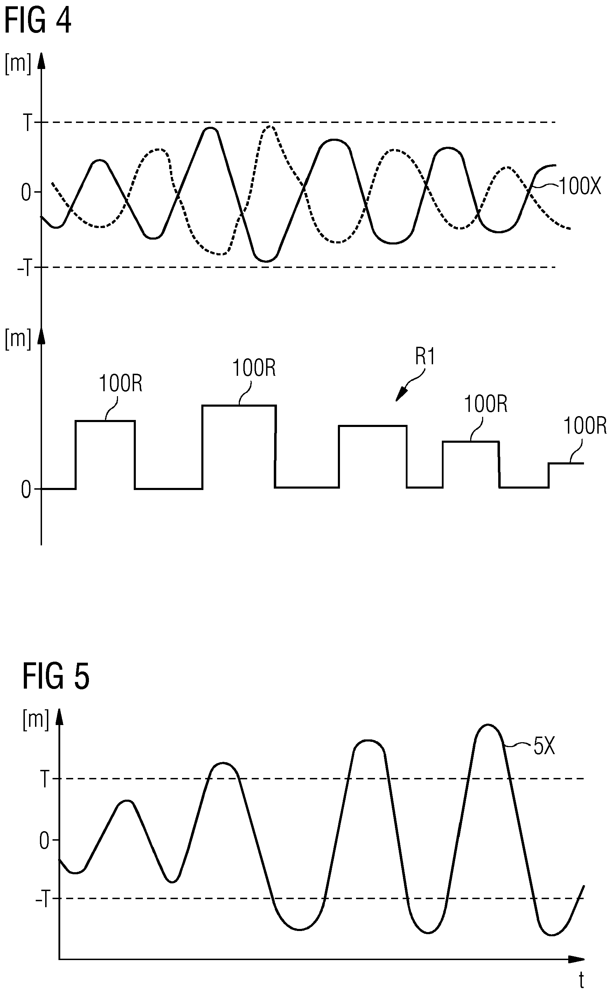

Figure 4 illustrates this approach to "damping" horizontal oscillations Mₓ of the rotor blade 20. By processing the sensor output 100, a developing oscillatory horizontal component 100X is detected, represented here as an essentially sinusoidal curve with increasing amplitude, for a point on one side of the lifting yoke 30. As explained above, such an oscillatory horizontal component 100X can be measured directly (for example by a suitably placed accelerometer), or can be inferred (for example from data generated by an inertial measurement unit or gyroscope). Since the lifting yoke oscillates about a fulcrum, an oscillatory horizontal component 100X for a similar point at the tip-end side of the lifting yoke 30 will be opposite in sign and similar in magnitude, as indicated by the dotted line.

For safe landing of the rotor blade 20, the lifting yoke oscillation amplitude may not exceed an acceptable predefined threshold TX as indicated by the horizontal dashed lines, and should preferably be well below that threshold. Therefore, once the lifting yoke 30 is near hub height, the control arrangement 12 preferably continuously monitors the horizontal motion of the lifting yoke 30. Any oscillation 100X is countered by a tagline response R1 as indicated, which comprises a series of alternately high and low pulling force adjustment values 100R. The tagline response R1 (as a percentage of maximum tagline tension) is computed to ensure that any sidewards movement of the root-end side of the lifting yoke 30 is actively countered by a sidewards pull (increased pulling force) of the respective tagline 32; the subsequent sideward movement of that side of the lifting yoke 30 is followed by a decreased pulling force of that tagline 32. A similar tagline response R2 (opposite sign, similar magnitude) is computed to counter any sidewards movement of the tip-end side of the lifting yoke 30. The effect of the tagline response R1, R2 is to reduce or damp the amplitude of the oscillatory horizontal component 100X of the lifting yoke motion, quickly returning it to a safe level within the accepted threshold TX, so that the rotor blade can be safely landed at the hub 21. Once the landing procedure is completed, i.e. the root end of the rotor blade has engaged with its pitch ring, the control arrangement 12 preferably ceases to adjust the horizontal tagline pulling forces.

As explained above, the tagline response R1, R2 can be understood as a series of winch commands to pay out and retract each horizontal tagline 32as necessary to counteract horizontal oscillating motion of the lifting yoke 30. Preferably, the pulling force adjustments R1, R2 of the horizontal taglines 32 are applied in such a way that a desired minimum tension 32TT or pulling force is maintained in the taglines 32, i.e. the amount and rate at which a tagline 32 is paid out or retracted are computed so that the tagline 32 is neither too taut nor too slack.

By quickly damping any horizontal oscillation of the lifting yoke 30 and therefore also any horizontal oscillation of the rotor blade 20 about its centre of mass, the inventive lifting arrangement 1 effectively and quickly suppresses horizontal oscillations of the rotor blade 20, as indicated by the decreasing amplitude, which remains within the safe magnitude TX. The root end of the rotor blade 20 can therefore be safely moved towards the hub 21 of the wind turbine 2 to complete the landing manoeuvre.

Figure 5 illustrates a problem that may arise when using the configuration of Figure 2 outside of safe wind speed conditions, or to lift a longer rotor blade. A strong drag force Fₓ on the rotor blade can initiate a significant horizontal oscillatory motion, and the curve 5X represents the horizontal displacement of any point on the rotor blade 20. Since the taglines of Figure 2 can only be controlled to maintain a predetermined tension 32T, the oscillation amplitude may increase beyond the acceptable threshold TX. Since the rotor blade 20 cannot be safely landed at its pitch ring 21P under such conditions, a landing manoeuvre will generally not be initiated when wind speeds are outside of the safe limits. If unacceptable rotor blade oscillations Mₓ occur when initially favourable wind speeds increase during a lifting manoeuvre that is already underway, it is necessary to cancel the manoeuvre, lower the rotor blade 20 back to deck level, and wait for wind conditions to improve. The need to wait for an acceptable "safe landing window" can add hours or even days to the installation procedure, resulting in unacceptably high costs.

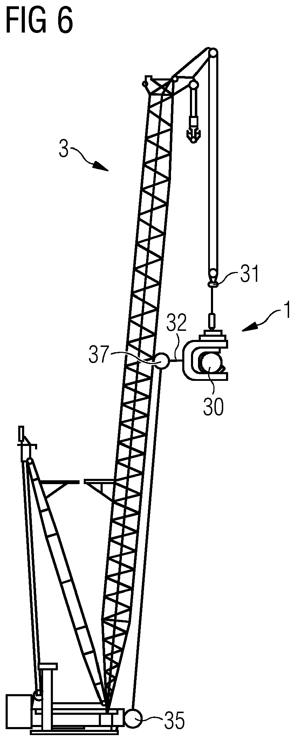

Figures 6 - 7 show alternative tagline configurations. In Figure 6, the tagline winches 35 are also mounted at the base of the crane 3, and each horizontal tagline 32 passes over a deflection roller 37 mounted on the crane 3 at a height usually at a height below or slightly bellow hub height. A deflection roller can be useful in various stages of the rotor blade installation, for example it can facilitate lifting the rotor blade from a storage rack. In the embodiment of Figure 6, the deflection roller 37 and the horizontal taglines 32 are mounted essentially at the same level as the lifting yoke.

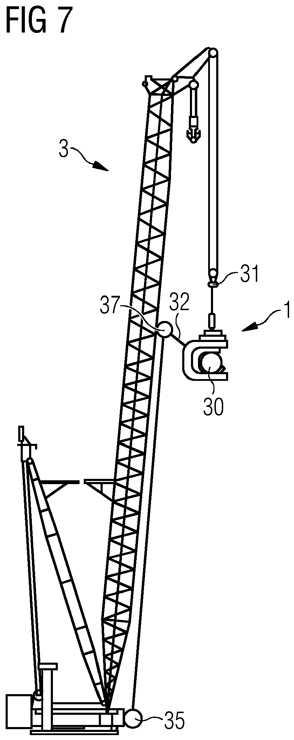

In Figure 7, the tagline winches 35 are also mounted at the base of the crane 3, and each horizontal tagline 32 passes over a deflection roller 37 mounted on the crane 3. In the embodiment of Figure 6, the deflection roller 37 and the horizontal taglines 32 are mounted at a higher level than the lifting yoke. Thus, the expression "essentially horizontal direction" can cover a relatively large angular range, for example a range in the order of 0° - 30°, wherein the horizontal taglines are not exactly adjacent at the same level as the lifting yoke, allowing for a force vector not completely on the X-Y plane, but essentially acting on the horizontal X plane.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements. The mention of a "unit" or a "module" does not preclude the use of more than one unit or module. Any pronoun denoting a specific gender shall be understood to apply equally to any gender identity.

## Claims

1. A lifting arrangement (1) for handling a wind turbine rotor blade (20) using a crane (3), which lifting arrangement (1) comprises
- a lifting yoke (30) for suspending a rotor blade (20) from a crane hook (31);
- a sensor arrangement (10) configured to measure the spatial orientation of the lifting yoke (30);
- an evaluation module (121) configured to detect horizontal oscillation (100X) of the lifting yoke (30) on the basis of the sensor output (100);
- a response module (122) configured to compute a damping response (R1, R2) to counteract a detected horizontal oscillation (100X); and
- a means (32, 35) of applying the damping response (R1, R2) to the lifting yoke (30).

2. A lifting arrangement (1) according to the preceding claim, wherein the centre of mass of the lifting yoke (30) essentially coincides with the centre the centre of mass (COM₂₀) of the rotor blade (20) .

3. A lifting arrangement (1) according to any of the preceding claims, wherein the sensor arrangement (10) comprises any of: an inertial measurement unit; a number of accelerometers, a number of gyroscopes.

4. A lifting arrangement (1) according to any of the preceding claims, wherein the means (32,35, 37) comprise a horizontal tagline arrangement (32) extending between the lifting yoke (30) and the crane (3), and wherein the computed damping response (R1, R2) comprises a series of pulling force adjustment values (100R) for a horizontal tagline (32).

5. A lifting arrangement (1) according to the preceding claim, wherein the horizontal tagline arrangement (32) comprises
- at least one horizontal tagline (32) extending between the lifting yoke (30), in particular deflected by a deflection point (37), and a tagline winch (35) mounted on the crane (3); and
- a winch drive unit (350) configured to apply the computed damping response (R1, R2) to its horizontal tagline (32).

6. A lifting arrangement according to claim 4 or claim 5, wherein the horizontal tagline arrangement comprises a first horizontal tagline (32) connected to one side (301) of the lifting yoke (30) and a second horizontal tagline (32) connected to the other side (302) of the lifting yoke (30).

7. A lifting arrangement according to any of claims 4 to 6, wherein the damping response (R1, R2) comprises a first damping response (R1) for the first horizontal tagline (32) and a horizontal damping response (R2) for the second horizontal tagline (32).

8. A lifting arrangement according to any of claims 4 to 7, wherein a horizontal tagline (32) passes over a deflection roller (37) mounted on the crane (3).

9. A lifting arrangement according to any of claims 4 to 8, wherein a tagline winch (35) is mounted at the base of the crane (3).

10. A method of handling a wind turbine rotor blade (20) using a crane (3),
- arranging a lifting yoke (30) about the rotor blade (20) and suspending the lifting yoke (30) from a crane hook (31) ;
- providing a sensor arrangement (10) to measure the spatial orientation of the lifting yoke (30) during a manoeuvre;
- evaluating the sensor output (100) to detect horizontal oscillation (100X) of the lifting yoke (30);
- computing a damping response (R1, R2) to counteract a detected horizontal oscillation (100X); and
- applying the damping response (R1, R2) to the lifting yoke (30) during the manoeuvre.

11. A method according to the preceding method claim, wherein a first damping response (R1) is computed for the side (301) of the lifting yoke (30) nearest the rotor blade root end, and a second damping response (R2) is computed for the opposite side (302) of the lifting yoke (30).

12. A method according to any of the preceding method claims, wherein the damping response (R1, R2) is computed to reduce horizontal oscillation (100X) of the lifting yoke (30) towards a target parameter (TX).

13. A method according to the preceding claim, wherein the target parameter is any of: a maximum horizontal oscillation amplitude (TX) of the lifting yoke (30); a maximum horizontal oscillation amplitude of the rotor blade root end; a maximum horizontal inclination angle of the lifting yoke (30).

14. A method according to any of the preceding method claims, wherein the damping response (R1, R2) is computed under consideration of wind speed and/or tower motion and/or wind direction.

15. A computer program product comprising a computer program that is directly loadable into a memory of a control unit (12) of a lifting arrangement (1) according to any of claims 1 to 9, and which comprises program elements for evaluating the sensor output (100) to detect horizontal oscillation (100X) of the lifting yoke (30) and for computing the damping response (R1, R2) when the computer program is executed by the control unit (12).
